## Europäisches Patentamt

## European Patent Office

## Office européen des brevets

(19)

(11) Veröffentlichungsnummer: **0 151 696**
**B1**

(12) **EUROPÄISCHE PATENTSCHRIFT**

(45) Veröffentlichungstag der Patentschrift:
**24.05.89**

(51) Int. Cl.⁴: **F 16 F 9/04**

(21) Anmeldenummer: **84112611.3**

(22) Anmeldetag: **19.10.84**

(54) Luftfederung insbesondere für Strassenfahrzeuge.

(30) Priorität: **21.12.83 DE 3346108**

(43) Veröffentlichungstag der Anmeldung:
**21.08.85 Patentblatt 85/34**

(45) Bekanntmachung des Hinweises auf die Patenterteilung:
**24.05.89 Patentblatt 89/21**

(84) Benannte Vertragsstaaten:
**AT BE CH DE FR GB IT LI LU NL SE**

(56) Entgegenhaltungen:
**DE-A- 2 024 674**
**DE-A- 3 246 962**
**FR-A- 2 427 922**
**GB-A- 2 044 395**
**US-A- 2 925 265**

(73) Patentinhaber: **Continental Aktiengesellschaft,
Königsworther Platz 1, D-3000 Hannover 1 (DE)**

(72) Erfinder: **Thurow, Gerhard, Malchensbrücke 7B,
D-3008 Garbsen 1 (DE)**

**Beschreibung**

Die Erfindung bezieht sich auf Luftfederungen, insbesondere für Straßenfahrzeuge, gemäß dem Oberbegriff des Patentanspruchs 1.

Eine derartige Luftfederung ist aus der GB-A-2 044 395 bekannt, und zwar in der Form, daß der Stützkolben an seinem dem Rollbelag zugewandten Ende einen teils konisch und teils zylindrisch eingezogenen Bereich aufweist, dessen gesamter zylindrischer Teil, der von einem Klemmring umschlossen ist, umlaufende Klemmrippen mit unsymmetrisch-dreieckigem Querschnitt aufweist, während der konische Teil, ohne daß an ihm Fixierungsmittel vorgesehen sind, durch eine flanschartige Endanschlagfläche begrenzt ist. Hierbei kann es im eigentlichen Befestigungsbereich, nämlich dem zylindrischen, die Klemmrippen tragenden, vom Spannring umschlossenen Teil leicht zu einer die Elastizitätsgrenze des Gummimaterials der Rollbalgwandung überschreitenden Überpressung kommen, wodurch im praktischen Dauereinsatz die notwendige Dichtwirkung in diesem Bereich verlorengeht. Hinzu kommt, daß bei der Montage der bekannten Luftfederungen durch die unsymmetrische Querschnittsform der Klemmrippen axiale Kraftkomponenten auf die Balgwandung auftreten, die zu unregelmäßigen axialen Verschiebungen und Dejustierungen des Balgendes führen können.

Bei einer aus der DE-A-2 024 674 bekannten Rollbalganordnung tritt zwar das Dejustierungsproblem nicht auf, da die Klemmrippen hier eine symmetrisch-dreieckige Querschnittsform besitzen; jedoch erwies es sich auch bei dieser Konstruktion als äußerst schwierig, die radiale Klemmung so zu dosieren, daß eine Überpressung der Balgwandung sicher vermieden und trotzdem im dynamischen Dauerbetrieb die notwendige Abdichtung im Befestigungsbereich gewährleistet wird.

Es stellte sich daher die Aufgabe, eine Luftfederung mit Rollbalg zu schaffen, bei der durch konstruktiv und fertigungstechnisch einfache und sicher beherrschbare Maßnahmen sowohl eine exakt reproduzierbare Justierung des Balges bei der Montage als auch eine dauerhafte Abdichtung des Balges am Stützkolben problemlos erreichbar war.

Diese Aufgabe wird nach der vorliegenden Erfindung durch eine gattungsgemäße Luftfederung gelöst, die sich durch das Zusammenwirken der im kennzeichnenden Teil des Patentanspruchs 1 genannten Merkmale vom vorbekannten Stand der Technik unterscheidet. In den Unteransprüchen sind vorteilhafte Weiterbildungen der Erfindung angegeben.

Durch die erfindungsgemäße Ausbildung des Befestigungsbereichs sind in diesem die Dichtungs- und die Befestigungsfunktion in optimaler Weise vereinigt. Der den insgesamt zylindrischen Befestigungsbereich umfassende Klemmring preßt die Rollbalgwandung nämlich einerseits gegen symmetrische Klemmrippen, an denen eine sichere Fixierung des Balgendes in seiner durch den flanschartigen Endanschlag vorgegebenen Position stattfindet und andererseits mit gleichmäßig flächiger Anpreßkraft gegen den benachbarten glattwandigen Teil des Befestigungsbereichs, so daß dort eine dauerhafte elastische Abdichtung erzeugt wird.

In einer besonders hoch beanspruchbaren Ausführungsform der Erfindung weist der Befestigungsbereich beiderseits der Klemmrippen je eine glattwandige Dichtungszone auf. Die symmetrisch-dreieckige Querschnittsform der Klemmrippen ist vorzugsweise gleichseitig-dreieckig oder mit einem äußeren Winkel von ca. 90° ausgebildet.

Die Erfindung wird anhand schematischer Darstellungen in der Zeichnung veranschaulicht:

Fig. 1 zeigt die auf eine Hälfte beschränkte Längsschnittansicht eines erfindungsgemäß befestigten Luftfeder-Rollbalges, und

Fig. 2 gibt den Befestigungsbereich eines erfindungsgemäß ausgebildeten Stützkolbens, ebenfalls im Längsschnitt, in einem größeren Maßstab wieder.

Der gezeichnete Rollbalg 3 ist in Form eines glattzylindrischen Schlauchkörpers beispielsweise aus synthetischem Kautschuk mit nicht weiter angedeuteten textilen Verstärkungseinlagen ohne Wulste oder andere Endverdickungen mit über seine ganze Länge gleichbleibender Wandstärke hergestellt. Er dient zum Abfedern des Fahrgestells eines Straßenkraftfahrzeugs gegen die Radachse und ist zu diesem Zweck mit seinem oberen Endabschnitt an einem mit dem Fahrgestell zusammenhängenden Deckel 4 und mit seinem unteren Endabschnitt an einem auf der Achse aufsitzenden Stützkolben 5 befestigt, wobei er unter der Wirkung des in seinem Inneren aufgebauten Luftdruckes die gezeichnete Gestalt mit einer nach dem unteren Endabschnitt überleitenden Rollfalte 13 annimmt. Der Stützkolben 5 wiederum bietet mit seinen an den Befestigungsbereich anschließenden Umfangsteilen Anlege- und Abrollflächen für die Rollfalte 13 des Balges. Er steht in ständiger offener Verbindung mit dem Balginnenraum und dient gleichzeitig als Zusatzluftbehälter. Beide Endabschnitte des Rollbalges 3 sind mit Hilfe in sich geschlossener metallischer Spannringe 6, 7 an den zugeordneten tragenden Fahrzeugteilen 4, 5 befestigt.

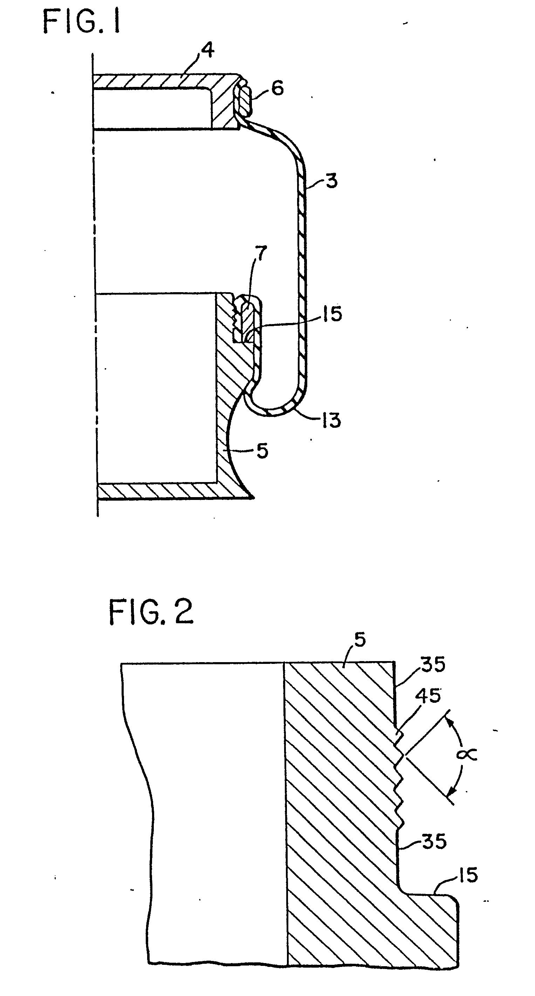

Der Stützkolben 5 ist an seinem oberen offenen Ende im Außenumfang zylindrisch so eingezogen, daß er gemäß der Darstellung in Fig. 1 den aufgeschobenen Endabschnitt des Rollbalges 3 zusammen mit dem auf einer flanschartig abgewinkelten ringförmigen Endanschlagfläche 15 aufsitzenden Spannring 7 bis zur vollständigen Ergänzung seines ursprünglichen Durchmessers aufnimmt. Der Spannring 7 bildet infolgedessen eine lückenlos sich anschließende Verlängerung des Stützkolben-Außenmantels.

Wie insbesondere die Darstellung in Fig. 2 deutlich zeigt, ist der eingezogene Befestigungsbereich des Stützkolbens 5 nur in einem axialen Teilabschnitt mit mehreren – in dem gezeichneten Ausführungsbeispiel fünf – Umfangsrippen 45 versehen, während er im übrigen glattwandig ausgebildet ist. Die Umfangsrippen haben eine gleichseitig-dreieckige Querschnittsform mit einem Außenwinkel α von vorzugsweise etwa 90° und schließen mit ihrer diesem Winkel gegenüberliegenden Grundfläche mit den oben und unten benachbarten glattzylindrischen Endabschnitten 35 des Stützkolbens ab. Im Einbauzustand des Rollbalges 3 formt sich die Balgwandung unter der Preßkraft des Spannringes 7 in die Zwischenräume zwischen den Umfangsrippen 45 hinein, so daß sich eine formschlüssige Verklammerung des aufgeschobenen Balgendabschnittes ergibt, ohne daß es dabei zu einer Überpressung oder zu axialen Verschiebungen der Balgwandung im Befestigungsbereich kommt. In den glattzylindrischen Zonen 35 des Befestigungsbereichs ist die erzeugte Pressung vergleichsweise geringer, so daß hier die Elastizität der Balgwandung dauerhaft eine sichere Abdichtung gewährleistet.

## Patentansprüche

1. Luftfederung, insbesondere für Straßenfahrzeuge, mit einem aus Gummi oder gummiähnlichen Kunststoffen mit Verstärkungseinlagen hergestellten Rollbalg (3), dessen Endabschnitte mittels metallischer Spannringe (6, 7) an Stützelementen (4, 5) befestigt sind, wobei wenigstens eines dieser Stützelemente in Form eines Stützkolbens (5) ausgebildet ist, dessen Mantelfläche eine Abrollfläche für die ihm zugeordnete Rollfalte (13) des Rollbalges (3) bildet und wobei der Stützkolben (5) an seinem dem Rollbalg (3) zugewandten Ende einen eingezogenen, umlaufende Klemmrippen (45) aufweisenden Befestigungsbereich besitzt, in dem das Balgende durch einen Spannring (7) fixiert ist und der durch eine flanschartige Endanschlagfläche (15) begrenzt ist, dadurch gekennzeichnet, daß die Klemmrippen (45) mit symmetrischem, gleichschenkelig-dreieckigem Querschnitt radial nach außen ragen und daß Klemmrippen (45) nur in einem axialen Teilabschnitt des insgesamt zylindrischen, von dem Spannring (7) umschlossenen Befestigungsbereichs vorgesehen sind, der im übrigen glattwandig ausgebildet ist.

2. Luftfederung nach Anspruch 1, dadurch gekennzeichnet, daß die Klemmrippen (45) in einer beiderseits von glattwandigen Zonen (35) begrenzten mittleren Zone des Befestigungsbereichs vorgesehen sind.

3. Luftfederung nach Anspruch 1 oder 2, dadurch gekennzeichnet, daß die Klemmrippen (45) mit gleichseitig-dreieckigem Querschnitt ausgebildet sind.

4. Luftfederung nach Anspruch 1 oder 2, dadurch gekennzeichnet, daß der äußere Dreieckswinkel (α) des Querschnittes der Klemmrippen (45) ca. 90° beträgt.

## Claims

1. Pneumatic suspension, in particular for road vehicles, having a roller bellows (3), which is produced from rubber or rubber-like plastics materials with reinforcing inserts, the end portions of which bellows are mounted on supporting elements (4, 5) by means of metallic tensioning rings (6, 7), at least one of these supporting elements being in the form of a supporting piston (5), the surface of which piston forms a rolling surface for the roller pleat (13) of the roller bellows (3) associated with the piston, and the supporting piston (5) having, at its end facing the roller bellows (3), a retracted mounting region which includes circumferential clamping ribs (45) and in which the bellows end is secured by a tensioning ring (7), said region being defined by a flange-like limit stop face (15), characterised in that the clamping ribs (45), having a symmetrical, isosceles-triangular cross-section, protude radially outwardly, and in that clamping ribs (45) are provided only in an axial partial portion of the generally cylindrical mounting region, which is surrounded by the tensioning ring (7) and is, moreover, smooth-walled.

2. Pneumatic suspension according to claim 1, characterised in that the clamping ribs (45) are provided in a central zone of the mounting region, which zone is defined on both sides by smooth-walled zones (35).

3. Pneumatic suspension according to claim 1 or 2, characterised in that the clamping ribs (45) are provided with an isosceles-triangular cross-section.

4. Pneumatic suspension according to claim 1 or 2, characterised in that the outer triangular angle (α) of the cross-section of the clamping ribs (45) is approx. 90°.

## Revendications

1. Suspension pneumatique, notamment pour véhicules routiers, comprenant un soufflet roulant (3) fabriqué en caoutchouc ou en matières plastiques analogues au caoutchouc, avec des insertions de renforcement, dont les segments d'extrémités sont fixés à des éléments d'appui (4, 5) à l'aide de colliers de serrage métalliques (6, 7), au moins un de ces éléments d'appui présentant la forme d'un piston d'appui (5) dont la surface latérale forme une surface de roulement pour le pli roulant (13) de soufflet roulant (3) qui lui est associé, le piston d'appui (5) présentant à son extrémité dirigée vers le soufflet roulant (3), une région de fixation rétrécie, région qui présente des nervures de serrage circonférentielles (45), dans laquelle l'extrémité du soufflet est fixée par un collier de serrage (7) et qui est limitée par une surface de butée d'extrémité (15) en forme de collerette, caractérisée en ce que les nervures de serrage (45) font saillie radialement vers l'extérieur avec une section symétrique, en forme de triangle équilatéral et en ce que les nervures de serrage (45) ne sont prévues que dans un segment partiel de la longueur axiale de la région de fixation, région qui est cylindrique dans son ensemble, qui est entouré par le collier de serrage (7), et qui est à paroi lisse sur le reste de son étendue.

2. Suspension pneumatique selon la revendication 1, caractérisée en ce que les nervures de serrage (45) sont prévues dans une zone médiane de la région de fixation qui est limitée des deux côtés par des zones (35) à paroi lisse.

3. Suspension pneumatique selon la revendication 1 ou 2, caractérisé en ce que les nervures de serrage (45) sont d'une configuration de section en triangle équilatéral.

4. Suspension pneumatique selon la revendication 1 ou 2, caractérisée en ce que l'angle extérieur (α) du triangle de la section des nervures de serrage (45) est d'environ 90°.

FIG. 1

FIG. 2